# FASCICULE DE BREVET EUROPEEN

(11) **EP 2 502 790 B1**
(45) Date de publication et mention de la délivrance du brevet: **11.05.2016**
(21) Numéro de dépôt: 12159117.6
(22) Date de dépôt: 12.03.2012
(51) Int. Cl.: B60R 19/18, B60R 19/24

(54) **Module de face avant de véhicule automobile comprenant une première zone renforcée et une deuxième zone non renforcée**
Modul für die Frontseite eines Kraftfahrzeugs, das eine erste verstärkte Zone und eine zweite nicht verstärkte Zone umfasst
Front surface module of an automobile comprising a first reinforced area and a second non-reinforced area

(30) Priorité: 21.03.2011 FR 1152296
(43) Date de publication de la demande: 26.09.2012
(73) Titulaire: Faurecia Bloc Avant, 92000 Nanterre (FR)
(72) Inventeur: Imbert, Didier, 70200 FROIDETERRE (FR); Bezuit, Jérôme, 90100 VELLESCOT (FR)
(74) Mandataire: Blot, Philippe Robert Emile

(56) Documents cités:
- DE-A1-102004 030 794
- DE-A1-102006 047 419
- DE-A1-102007 024 783
- DE-A1-102008 058 224
- US-A1- 2003 211 311

## Description

La présente invention concerne un module de face avant de véhicule automobile, du type destiné à être fixé à la partie avant de la caisse d'un véhicule automobile, comprenant une poutre supérieure et une poutre inférieure reliée l'une à l'autre par au moins un jambage, ledit module étant réalisé en une seule pièce moulée.

L'invention concerne également un procédé de réalisation d'un tel module de face avant.

Un module de face avant du type décrit ci-dessus forme par exemple une « face avant technique » de véhicule automobile et permet de fixer divers éléments du véhicule sous le capot de celui-ci, tels que les optiques, un groupe de chauffage, ventilation et climatisation (HVAC), une serrure de fermeture du capot et autres.

Un tel module peut également avoir pour fonction d'assurer une absorption d'une partie de l'énergie due à un choc contre l'avant du véhicule et de limiter l'intrusion d'éléments extérieurs dans le véhicule automobile lors de ce choc, du fait de sa structure et des matériaux employés pour le réaliser.

A cet effet, pour que le module présente la rigidité suffisante pour supporter les éléments du véhicule fixés sur celui-ci, le module est par exemple réalisé en une pièce moulée en matériau plastique renforcé par des fibres de verre, par exemple un matériau comprenant autour de 70% de polypropylène et 30% de fibres de verre ou 60% de polypropylène et 40% de fibres de verre pour avoir un matériau plus rigide encore.

Cependant, lorsque le choc se produit entre le véhicule automobile et un piéton, la résistance et la rigidité du module de face avant occasionne souvent des blessures au piéton, notamment au niveau de ses jambes. Pour pallier ce risque, il est proposé d'ajouter des éléments d'absorption spécifiques en avant du module de face avant agencés pour s'écraser lors d'un choc avec un piéton et pour protéger ceux-ci afin de limiter le risque de blessures. Ces éléments d'absorption sont par exemple formés par des patins en matériau souple, telle qu'une mousse ou autre ou par des éléments tubulaires creux capables de se déformer en absorbant de l'énergie.

Cependant, de tels éléments d'absorption sont encombrants et occupent un espace important sous le capot alors que le volume disponible tend à être réduit. En outre, il faut assurer la fixation de ces éléments en avant du module de face avant, ce qui nécessite des moyens de fixation supplémentaires, complique le montage du véhicule et alourdit celui-ci.

Le document US2003/0211311 divulgue un module de face avant d'accord le préambule de la revendication 1.

L'un des buts de l'invention est de pallier les inconvénients ci-dessus en proposant un module de face avant permettant d'assurer la protection des piétons en cas de choc contre le véhicule sans nécessiter l'ajout d'éléments d'absorption spécifiques.

A cet effet, le module de face avant du type précité, dans lequel le module comprend au moins une première zone réalisée en un matériau plastique renforcé par des fibres et au moins une deuxième zone réalisée en un matériau plastique non renforcé.

La deuxième zone réalisée en matériau plastique non renforcé présente une raideur moindre que la première zone réalisée en matériau plastique renforcé. Cette deuxième zone est disposée en regard de la zone de choc piéton et permet d'assurer l'absorption d'énergie due à ce choc et de protéger le piéton contre les risques de blessures. Ainsi, le module de face avant assure la fonction de protection des piétons sans nécessiter d'éléments d'absorption spécifiques supplémentaires en avant du module de face avant.

Selon d'autres caractéristiques du module de face avant :
- la première zone et la deuxième zone sont liées entre elles par le surmoulage du matériau plastique renforcé, formant la première zone, sur au moins un bord de la deuxième zone en matériau plastique non renforcé ;
- la première zone comprend au moins la poutre supérieure et le jambage, la deuxième zone comprenant au moins la poutre inférieure ;
- le module de face avant comprend au moins deux jambages latéraux reliant la poutre supérieure à la poutre inférieure, les deux jambages latéraux définissant un cadre avec la poutre supérieure et la poutre inférieure, les deux jambages latéraux appartenant à la première zone du module de face avant ;
- le module de face avant comprend des poutres latérales supérieures et inférieures s'étendant respectivement dans le prolongement de la poutre supérieure et de la poutre inférieure de chaque côté desdites poutres supérieure et inférieure ;
- les-poutres latérales inférieures appartiennent à la deuxième zone ;
- le module de face avant comprend un jambage central reliant la poutre supérieure à la poutre inférieure, ledit jambage central s'étendant entre les jambages latéraux et appartenant à la première zone ; et
- la première zone comprend au moins un élément de renfort métallique, ledit élément de renfort étant surmoulé par le matériau plastique renforcé de la première zone.

L'invention concerne également un procédé de réalisation d'un module de face avant tel que décrit ci-dessus, le procédé comprenant les étapes suivantes :
- mouler en une ou plusieurs pièces la deuxième zone du module au moyen d'un matériau plastique non renforcé,
- placer ladite deuxième zone dans une cavité de moulage présentant la forme du module de face avant à réaliser,
- injecter un matériau plastique renforcé par des fibres dans ladite cavité de moulage de sorte à former la première zone du module et à surmouler au moins un bord de la deuxième zone afin de solidariser la première zone et la deuxième zone entre elles.

Selon une autre caractéristique du procédé, le procédé comprend une étape de placement d'au moins un élément de renfort métallique dans la zone de la cavité de moulage destinée à former la première zone du module avant l'injection du matériau plastique renforcé de sorte à surmouler ledit élément de renfort par le matériau plastique renforcé lors de l'injection du matériau plastique renforcé.

D'autres aspects et avantages de l'invention apparaîtront à la lecture de la description qui suit, donnée à titre d'exemple et faite en référence aux dessins annexés, dans lesquels :
- la Fig. 1 est une représentation schématique en perspective d'un module de face avant selon l'invention,
- la Fig. 2 est une représentation schématique en perspective des éléments de la deuxième zone du module de face avant de la Fig. 1.

Dans la description, les termes « supérieur » et « inférieur » sont définis par rapport à la direction d'élévation d'un véhicule automobile monté, c'est-à-dire par rapport à une direction sensiblement verticale.

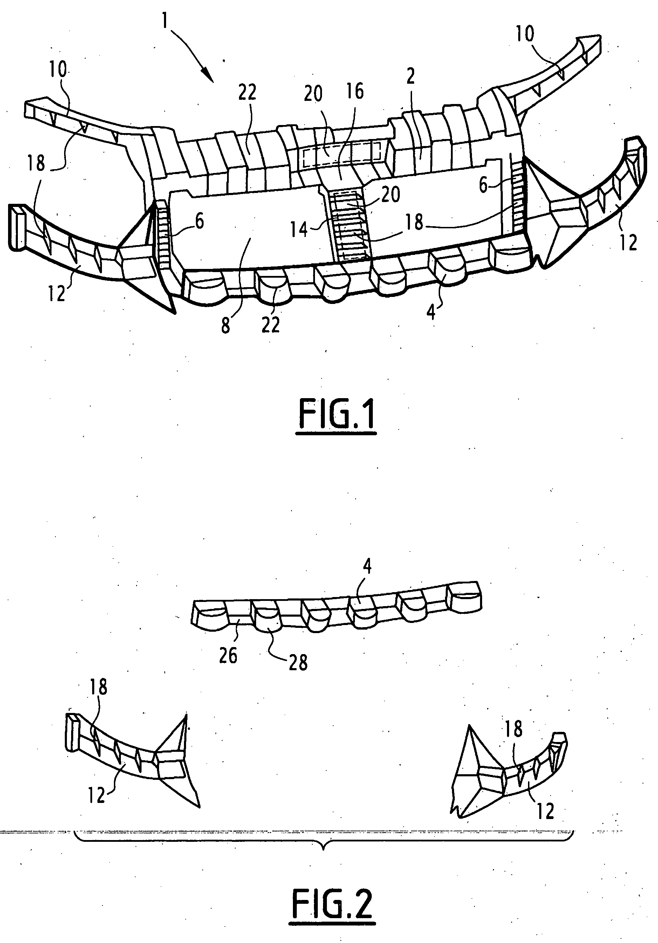

En référence à la Fig. 1, on décrit un module de face avant 1, destiné à être fixé à la partie avant de la caisse d'un véhicule automobile de façon classique par exemple en regard de longerons de la caisse du véhicule. Un tel module de face avant 1 s'étend par exemple sous toute ou partie de la hauteur disponible sous le capot du véhicule automobile. Plus particulièrement, le module de face avant 1 est par exemple fixé en regard de la « voie haute » du véhicule automobile, c'est-à-dire en regard des longerons supérieurs de la caisse du véhicule.

Le module de face avant 1 est réalisé d'une seule pièce moulée en matériaux plastiques et comprend essentiellement une poutre supérieure 2 et une poutre inférieure 4 séparées l'une de l'autre en hauteur et deux jambages 6 latéraux séparés l'un de l'autre en largeur et reliant la poutre supérieure 2 à la poutre inférieure 4, de sorte que la poutre supérieure 2, la poutre inférieure 4 et les jambages latéraux 6 forment un cadre entourant une ouverture centrale 8.

Les poutres supérieure 2 et inférieure 4 sont sensiblement parallèles entre elles et les jambages latéraux 6 sont sensiblement parallèles l'un à l'autre de sorte que l'ouverture centrale 8 présente une forme sensiblement rectangulaire. L'ouverture centrale 8 est par exemple destinée à recevoir une partie d'un groupe de chauffage, ventilation et climatisation.

Le module de face avant 1 comprend en outre deux poutres latérales supérieures 10 et deux poutres latérales inférieures 12.

Les poutres latérales supérieures 10 s'étendent de part et d'autre de la poutre supérieure 2 dans le prolongement de celle-ci. Ainsi une poutre latérale supérieure 10 s'étend à partir d'une extrémité de la poutre supérieure 2 dans le prolongement de celle-ci du côté d'un des jambages latéraux 6 opposé à l'ouverture centrale 8 et l'autre poutre latérale supérieure 10 s'étend à partir de l'autre extrémité de la poutre supérieure 2 dans le prolongement de celle-ci du côté de l'autre jambage latéral opposé à l'ouverture centrale 8.

Les poutres latérales inférieures 12 s'étendent de part et d'autre de la poutre inférieure 4 dans le prolongement de celle-ci. Ainsi une poutre latérale inférieure 12 s'étend à partir d'une extrémité de la poutre inférieure 4 dans le prolongement de celle-ci du côté d'un des jambages latéraux 6 opposé à l'ouverture centrale 8 et l'autre poutre latérale inférieure 12 s'étend à partir de l'autre extrémité de la poutre inférieure 4 dans le prolongement de celle-ci du côté de l'autre jambage latéral opposé à l'ouverture centrale 8.

Les poutres latérales supérieures 10 sont sensiblement parallèles aux poutres latérales inférieures 12, de sorte que l'espace, s'étendant entre une poutre latérale supérieure 10 et une poutre latérale inférieure 12 s'étendant du même côté du module 1, est adapté pour recevoir un optique, ou phare, de véhicule automobile.

Selon le mode de réalisation représenté sur la Fig. 1, le module de face avant 1 comprend en outre un jambage central 14, sensiblement parallèle aux jambages latéraux 6, reliant la poutre supérieure 2 à la poutre inférieure 4. Le jambage central 14 s'étend entre les jambages latéraux 6 sensiblement au centre des poutres supérieure 2 et inférieure 4 de sorte à séparer l'ouverture centrale 8 en deux ouvertures sensiblement de mêmes dimensions.

Les poutres supérieure 2 et inférieure 4, ainsi que les jambages 6 et 14 et les poutres latérales supérieures 10 et inférieures 12 sont agencées pour recevoir divers éléments du véhicule automobile, comme décrit précédemment. A cet effet, ils comprennent par exemple des moyens de fixation ou de réception (non représentés), tels que des clips ou des logements, permettant la fixation de ces éléments et/où la fixation du module de face avant 1 au véhicule automobile. A titre d'exemple, la poutre supérieure 2 comprend un logement central 16 permettant la réception des moyens de fermeture et de verrouillage du capot du véhicule automobile.

Pour augmenter la résistance et/ou la rigidité et adapter le comportement du module de face avant 1 en cas de choc contre le véhicule automobile, les jambages 6 et 14 et les poutres latérales supérieures 10 et inférieures présentent par exemple un jeu de nervures 18 s'étendant sur la face avant du module de face avant 1. De même, pour augmenter la rigidité de certains emplacements du module de face avant 1, un élément de renfort métallique 20 est noyé dans le module de face avant 1 à chacun de ces emplacements. A titre d'exemple, on prévoit un élément de renfort 20 dans le jambage central 14 et un élément de renfort 20 dans la poutre supérieure 2, sous le logement central 16 de réception des moyens de fermeture et de verrouillage du capot, comme représenté en traits pointillés sur la Fig. 1.

Le module de face 1 avant décrit ci-dessus doit assurer les fonctions classiques d'un module de face avant, mais également une absorption d'énergie adaptée en cas de « choc piéton », c'est-à-dire en cas de choc entre le véhicule et un piéton en limitant de risque de blessure du piéton.

A cet effet, le module de face avant 1, comprend une première zone 22 réalisée de façon classique en matériau plastique renforcé par des fibres permettant de conférer la rigidité et la raideur voulue au module de face avant 1 et une deuxième zone 24, représentée en traits plus épais sur la Fig. 1, réalisée en un matériau plastique non renforcé, de raideur moindre que le matériau plastique renforcé et adapté pour ne pas occasionner de blessures à un piéton en cas de « choc piéton ».

La première zone 22 est par exemple formée par la poutre supérieure 2, les jambages latéraux 6 et central 14 et les poutres latérales supérieures 10. Le matériau plastique renforcé de la première zone 22 est par exemple du polypropylène renforcé par des fibres de verre. En particulier le matériau plastique renforcé de la première zone 22 comprend sensiblement entre 60% et 70% de polypropylène et entre 30% et 40% de fibres de verre.

La deuxième zone 24 est par exemple formée par la poutre inférieure 4 et les poutres latérales inférieures 12, qui sont les parties du module de face avant qui sont destinées à s'étendre en regard des jambes des piétons passant devant le véhicule, en particulier en regard des tibias et genoux de ces piétons. La poutre inférieure 4 est par exemple agencée pour favoriser la protection des piétons de par sa forme. Elle comprend par exemple des alvéoles 26 et des nervures avant arrondies 28 agencées pour s'écraser en absorbant de l'énergie en cas de choc avec un piéton. D'autres formes d'alvéoles et/ou de nervures permettant l'écrasement absorbant l'énergie en cas de choc piéton sont également possibles. Le matériau plastique non renforcé est par exemple du polypropylène utilisé seul. Par non renforcé, on entend donc qu'il n'est pas ajouté de fibres ou autre au matériau plastique utilisé pour réaliser la deuxième zone 24.

La première zone 22 et la deuxième zone 24 sont liées entre elles par surmoulage du matériau plastique renforcé de la première zone 22 sur les bords de la deuxième zone 24. Ainsi, la partie extrême inférieure de chaque jambage latéral 6, appartenant à la première zone 22, est surmoulée sur la partie extrême adjacente de la poutre inférieure 4 et de la poutre latérale inférieure 12 correspondante, appartenant à la deuxième zone 24. La partie extrême inférieure du jambage central 14 est surmoulée sur un bord de la poutre inférieure 4, s'étendant sensiblement au centre de celle-ci. On assure ainsi une bonne cohésion du module de face avant 1 entre la première zone 22 et la deuxième zone 24, le surmoulage assurant une solidarisation efficace de la deuxième zone 24 à la première zone 22. Selon un mode de réalisation, des ouvertures sont formées dans la deuxième zone 24, ces ouvertures étant remplies par le matériau plastique renforcé de la première zone 22 lors du surmoulage, de sorte à créer une liaison du type « rivetage » entre la première 22 et la deuxième 24 zones.

Ainsi, le module de face avant 1 permet, en une seule pièce, d'assurer les fonctions classiques d'un module de face avant et d'assurer la protection des piétons sans ajouts d'éléments d'absorption spécifiques extérieurs au module de face avant.

La première zone 22 et la deuxième zone 24 décrites ci-dessus peuvent être modifiées en changeant les éléments qui sont réalisés en matériau plastique renforcé et ceux qui sont réalisé en matériau plastique non renforcé en fonction des besoins d'absorption du module de face avant 1. Ainsi, par exemple, il est possible que la deuxième zone 24 ne comprenne que les poutres latérales inférieures 12 et que la poutre inférieure 4 appartienne à la première zone. Toutes les configurations de première zone et de deuxième zone sont envisageables en fonction des besoins d'absorption du module de face avant.

On décrit à présent le procédé de réalisation du module de face avant 1 décrit ci-dessus.

Au cours d'une première étape, on réalise, par exemple par moulage par injection, les éléments de la deuxième zone 24. Selon le mode de réalisation représenté sur la Fig. 2, les éléments de la deuxième zone 24 sont réalisés séparément les uns des autres, c'est-à-dire qu'une poutre latérale inférieure 12 gauche, une poutre inférieure 4 et une poutre latérale inférieure 12 droite sont réalisées séparément en un matériau plastique non renforcé. Selon un autre mode de réalisation, toute la deuxième zone 24 est réalisée d'une seule pièce en un matériau plastique non renforcé.

Lors d'une deuxième étape, les éléments de la deuxième zone 24 sont placés dans une cavité de moulage par injection présentant la forme du module de face avant 1. La cavité de moulage est agencée pour que, lorsqu'elle est fermée, le matériau plastique renforcé injecté forme la première zone 22 et surmoule les bords et/ou remplit les ouvertures des éléments de la deuxième zone 24 prévus à cet effet. Ainsi, lorsque la cavité de moulage est ouverte après injection du matériau plastique renforcé, on obtient un module de face avant 1 dont la première zone 22 est solidarisée à la deuxième zone 24 par surmoulage.

Lorsque des éléments de renfort métalliques 20 sont prévus, ceux-ci sont ajoutés dans la cavité de moulage par injection avant l'injection du matériau plastique renforcé afin d'être surmoulés par le matériau plastique renforcé formant la première zone 22.

On obtient ainsi un module de face avant 1 d'une seule pièce, adapté pour remplir ses fonctions classiques et pour protéger lés piétons en cas de choc piéton.

## Revendications

1. Module de face avant (1) de véhicule automobile, destiné à être fixé à la partie avant de la caisse d'un véhicule automobile, comprenant une poutre supérieure (2) et une poutre inférieure (4) reliée l'une à l'autre par au moins un jambage (6, 14), ledit module étant réalisé en une seule pièce moulée, comprenant au moins une première zone (22) réalisée en un matériau plastique renforcé par des fibres et au moins une deuxième zone (24) réalisée en un matériau plastique non renforcé, la première zone (22) comprenant au moins la poutre supérieure (2) et le jambage (6, 14), la deuxième zone (24) comprenant au moins la poutre inférieure (4),
**caractérisé en ce qu'**il comprend des poutres latérales supérieures (10) et inférieures (12) s'étendant respectivement dans le prolongement de la poutre supérieure (2) et de la poutre inférieure (4) de chaque côté desdites poutres supérieure (2) et inférieure (4), les poutres latérales supérieures (10) appartenant à la première zone (22) et les poutres latérales inférieures (12) appartenant à la deuxième zone (24).

2. Module de face avant selon la revendication 1, **caractérisé en ce que** la première zone (22) et la deuxième zone (24) sont liées entre elles par le surmoulage du matériau plastique renforcé, formant la première zone (22), sur au moins un bord de la deuxième zone (24) en matériau plastique non renforcé.

3. Module de face avant selon la revendication 1 ou 2, caractérisé ce qu'il comprend au moins deux jambages latéraux (6) reliant la poutre supérieure (2) à la poutre inférieure (4), les deux jambages latéraux (6) définissant un cadre avec la poutre supérieure (2) et la poutre inférieure (4), les deux jambages latéraux (6) appartenant à la première zone (22) du module de face avant.

4. Module de face avant selon la revendication 3, **caractérisé en ce qu'**il comprend un jambage central (14) reliant la poutre supérieure (2) à la poutre inférieure (4), ledit jambage central (14) s'étendant entre les jambages latéraux (6) et appartenant à la première zone (22).

5. Module de face avant selon l'une quelconque des revendications 1 à 4, **caractérisé en ce que** la première zone (22) comprend au moins un élément de renfort métallique (20), ledit élément de renfort (20) étant surmoulé par le matériau plastique renforcé de la première zone (22).

6. Procédé de réalisation d'un module de face (1) avant selon l'une quelconque des revendications 1 à 5, **caractérisé en ce qu'**il comprend les étapes suivantes :
- mouler en une ou plusieurs pièces la deuxième zone (24) du module au moyen d'un matériau plastique non renforcé,
- placer ladite deuxième zone (24) dans une cavité de moulage présentant la forme du module de face avant (1) à réaliser,
- injecter un matériau plastique renforcé par des fibres dans ladite cavité de moulage de sorte à former la première zone (22) du module et à surmouler au moins un bord de la deuxième zone (24) afin de solidariser la première zone (22) et la deuxième zone (24) entre elles.

7. Procédé selon la revendication 6, **caractérisé en ce qu'**il comprend une étape de placement d'au moins un élément de renfort métallique (20) dans la zone de la cavité de moulage destinée à former la première zone (22) du module (1) avant l'injection du matériau plastique renforcé de sorte à surmouler ledit élément de renfort (22) par le matériau plastique renforcé lors de l'injection du matériau plastique renforcé.

## Patentansprüche

1. Frontseiten-Modul (1) eines Kraftfahrzeugs, das dazu bestimmt ist, am Frontabschnitt der Karosserie eines Kraftfahrzeugs befestigt zu sein, aufweisend einen oberen Balken (2) und einen unteren Balken (4), die über wenigstens einen Pfosten (6, 14) miteinander verbunden sind, wobei das Modul aus einem einzigen gegossenen Stück realisiert ist, aufweisend wenigstens einen ersten Bereich (22), der aus einem Kunststoffmaterial realisiert ist, das durch Fasern verstärkt ist, und wenigstens einen zweiten Bereich (24), der aus einem nicht verstärkten Kunststoffmaterial realisiert ist, wobei der erste Bereich (22) wenigstens den oberen Balken (2) und den Pfosten (6, 14) aufweist und der zweite Bereich (24) wenigstens den unteren Balken (4) aufweist,
**dadurch gekennzeichnet, dass** es aufweist seitliche obere (10) und seitliche untere (12) Balken, die sich jeweils in der Verlängerung des oberen Balkens (2) und des unteren Balkens (4) auf jeder Seite des besagten oberen Balkens (2) und des besagten unteren Balkens (4) erstrecken, wobei die seitlichen oberen Balken (10) zu dem ersten Bereich (22) gehören und die seitlichen unteren Balken (12) zu dem zweiten Bereich (24) gehören.

2. Frontseiten-Modul gemäß Anspruch 1, **dadurch gekennzeichnet**, der erste Bereich (22) und der zweite Bereich (24) untereinander verbunden sind durch Überformung des verstärkten Kunststoffmaterials, das den ersten Bereich (22) ausbildet, über wenigstens einen Rand des zweiten Bereichs (24) aus nicht verstärktem Kunststoffmaterial.

3. Frontseiten-Modul gemäß Anspruch 1 oder 2, **dadurch gekennzeichnet, dass** es wenigstens zwei seitliche Pfosten (6) aufweist, die den oberen Balken (2) mit dem unteren Balken (4) verbinden, wobei die beiden seitlichen Pfosten (6) mit dem oberen Balken (2) und dem unteren Balken (4) einen Rahmen definieren, wobei die beiden seitlichen Pfosten (6) zu dem ersten Bereich (22) des Frontseiten-Moduls gehören.

4. Frontseiten-Modul gemäß Anspruch 3, **dadurch gekennzeichnet, dass** es einen zentralen Pfosten (14) aufweist, der den oberen Balken (2) mit dem unteren Balken (4) verbindet, wobei der besagte zentrale Pfosten (14) sich zwischen den seitlichen Pfosten (6) erstreckt und zu dem ersten Bereich (22) gehört.

5. Frontseiten-Modul gemäß irgendeinem der Ansprüche 1 bis 4, **dadurch gekennzeichnet, dass** der erste Bereich (22) wenigstens ein metallisches Verstärkungselement (20) aufweist, wobei das Verstärkungselement (20) von dem verstärkten Kunststoffmaterial des ersten Bereichs (22) überformt ist.

6. Verfahren zur Realisierung eines Frontseiten-Moduls (1) nach irgendeinem der Ansprüche 1 bis 5, **dadurch gekennzeichnet, dass** es die folgenden Schritte aufweist:
- Gießen des zweiten Bereichs (24) des Moduls in einem oder mehreren Stücken aus einem nicht verstärkten Kunststoffmaterial,
- Platzieren des besagten zweiten Bereichs (24) in einer Gießformkavität, welche die Form des zu realisierenden Frontseiten-Moduls (1) hat,
- Einspritzen eines faserverstärkten Kunststoffmaterials in die besagte Gießformkavität, um den ersten Bereich (22) des Moduls zu bilden und um wenigstens einen Rand des zweiten Bereichs (24) zu überformen, um den ersten Bereich (22) und den zweiten Bereich (24) untereinander gemeinsam zu machen.

7. Verfahren gemäß Anspruch 6, **dadurch gekennzeichnet, dass** es aufweist einen Schritt des Platzierens wenigstens eines metallischen Verstärkungselements (20) in dem Bereich der Gießformkavität, der dazu bestimmt ist, den ersten Bereich (22) des Moduls (1) zu bildet, vor dem Einspritzen des verstärkten Kunststoffmaterials, um das Verstärkungselement (20) durch das verstärkte Kunststoffmaterial zu überformen während des Einspritzens des verstärkten Kunststoffmaterials.

## Claims

1. A front-end module (1) for a motor vehicle intended to be fixed to the front part of the body of a motor vehicle, comprising an upper beam (2) and a lower beam (4) connected to each other by at least one jamb (6, 14), said module being produced as a single moulded part comprising at least one first area (22) made of a fibre-reinforced plastic material and at least one second area (24) made of a non-reinforced plastic material, said first area (22) comprising at least said upper beam (2) and said jamb (6, 14), said second area (24) comprising at least said lower beam (4),
**characterised in that** it comprises upper (10) and lower (12) lateral beams respectively extending in the extension of said upper beam (2) and of said lower beam (4) on each side of said upper (2) and lower (4) beams, with said upper lateral beams (10) belonging to said first area (22) and said lower lateral beams (12) belonging to said second area (24).

2. The front-end module according to claim 1, **characterised in that** said first area (22) and said second area (24) are connected together by over-moulding the reinforced plastic material, forming said first area (22), on at least one edge of said second area (24) made of non-reinforced plastic material.

3. The front-end module according to claim 1 or 2, **characterised in that** it comprises at least two lateral jambs (6) connecting said upper beam (2) to said lower beam (4), said two lateral jambs (6) defining a frame with said upper beam (2) and said lower beam (4), said two lateral jambs (6) belonging to said first area (22) of said front-end module.

4. The front-end module according to claim 3, **characterised in that** it comprises a central jamb (14) connecting said upper beam (2) to said lower beam (4), said central jamb (14) extending between said lateral jambs (6) and belonging to said first area (22).

5. The front-end module according to any one of claims 1 to 4, **characterised in that** said first area (22) comprises at least one metal reinforcing element (20), said reinforcing element (20) being over-moulded by the reinforced plastic material of said first area (22).

6. A method for producing a front-end module (1) according to any one of claims 1 to 5, **characterised in that** it comprises the following steps:
- moulding said second area (24) of said module in one or more parts using a non-reinforced plastic material;
- placing said second area (24) in a moulding cavity having the shape of the front-end module (1) to be produced;
- injecting a fibre-reinforced plastic material into said moulding cavity so as to form said first area (22) of said module and to over-mould at least one edge of said second area (24), so as to make said first area (22) and said second area (24) integral with each other.

7. The method according to claim 6, **characterised in that** it comprises a step of placing at least one metal reinforcing element (20) in the area of said moulding cavity intended to form said first area (22) of said module (1) before injecting the reinforced plastic material, so as to over-mould said reinforcing element (22) with the reinforced plastic material when the reinforced plastic material is injected.
